Europäisches Patentamt

European Patent Office

Office européen des brevets

(19)

(11) Veröffentlichungsnummer: **0 101 757**
**A1**

(12) # EUROPÄISCHE PATENTANMELDUNG

(21) Anmeldenummer: 82108017.3

(22) Anmeldetag: 01.09.82

(51) Int. Cl.³: **G 01 C 15/04**
**E 01 F 9/02**

(43) Veröffentlichungstag der Anmeldung:
07.03.84 Patentblatt 84/10

(84) Benannte Vertragsstaaten:
AT BE CH DE FR GB IT LI LU NL SE

(71) Anmelder: Frings, Ursula
Stüttgesgasse 2
D-5107 Simmerath(DE)

(72) Erfinder: Frings, Ursula
Stüttgesgasse 2
D-5107 Simmerath(DE)

(74) Vertreter: Köhne, Friedrich, Dipl.-Ing.
Postfach 250265 Lothringer Strasse 81
D-5000 Köln 1(DE)

(54) Vorrichtung zum Markieren eines vermessenen Geländepunktes im Erdreich.

(57) Vorrichtungen zum Markieren eines vermessenen Geländepunktes im Erdreich bestehen im allgemeinen aus Grenzsteinen, Vermarkungsstäben oder ähnlichen ins Erdreich eingegrabenen oder eingeschlagenen Gegenständen, die oftmals durch weitere tiefer ins Erdreich eingelassene Markierungen gesichert sind.

Um das Auffinden derartiger Markierungsvorrichtungen durch an sich bekannte Suchgeräte zu erleichtern, wird vorgeschlagen, einen in das Erdreich versenkbaren Körper (1) vorzusehen, welcher in Abhängigkeit von der Tiefe der Versenkung und/oder der Wichtigkeit des Geländepunktes mit einem oder mehreren Dauermagneten (14 bis 17) versehen ist.

EP 0 101 757 A1

./...

FIG.1

- 1 -

## Vorrichtung zum Markieren eines vermessenen Geländepunktes im Erdreich

Die Erfindung bezieht sich auf eine Vorrichtung zum Markieren eines vermessenen Geländepunktes im Erdreich.

Im Vermarkungswesen ist es allgemein bekannt, vermessene Geländepunkte zu markieren. Derartige Geländepunkte sind zum Beispiel die Grenzen, insbesondere die Ecken von Grundstücken, wie Baugrundstücken, Wiesen, Feldern, Waldgrundstücken, aber auch Straßen, Plätzen usw. Zum Markieren dieser vermessenen Geländepunkte ist es üblich, zum Beispiel Grenzsteine oder Vermarkungsstäbe oder metallene Stäbe mit Kopf in das Erdreich einzugraben oder einzuschlagen. Diese Markierungen, die sich meist nahe der Erdoberfläche befinden, können leicht beabsichtigt oder auch unbeabsichtigt versetzt oder entfernt werden, zum Beispiel bei der Bearbeitung landwirtschaftlich genutzter Flächen oder bei Bauarbeiten, bei Erdanschüttungen oder dergleichen. Eine Verlagerung der Markierungen kann auch zum Beispiel an Flußufern dadurch erfolgen, daß der Wasserdruck des Flusses bei unterschiedlichem Wasserstand einen Druck auf das Flußufer ausübt. Man ist daher dazu übergegangen, zusätzlich zu den Markierungen, die nahe der Geländeoberfläche vorgesehen sind, weitere Markierungen darunter im Erdreich einzulassen. Je nach den Gegebenheiten kann die Tiefe dieser zusätzlichen Markierungen mindestens 60 bis 75 cm, vielfach aber auch 2 bis 3 m und darüber betragen. Diese Markierungen sind zwar recht gut gegen beabsichtigtes oder unbeabsichtigtes Verrücken oder Entwenden gesichert, jedoch ist es in der Praxis bei Vermessungsarbeiten außerordentlich schwierig, diese Markierungen später im Erdreich wieder aufzufinden. Dazu sind meist langwierige Ausgrabungsarbeiten erforderlich.

Für einen anderen Bereich der Technik wurden bereits Suchgeräte entwickelt, die das Aufsuchen von metallischen Gegenständen im Erdboden, z.B. von Wasserleitungen, Stromkabeln, verschütteten Schacht- und Brunnenverschlußdeckeln und dergleichen erleichtern sollen. Zur Anwendung dieser Suchgeräte im Vermarkungswesen wurde auch bereits vorgeschlagen, Markierungsrohre aus ferromagnetischem Werkstoff im Erdboden einzulassen, allerdings möglichst dicht unterhalb der Erdoberfläche. Ferromagnetische Werkstoffe haben bekanntlich die Eigenschaft, in ihrem Bereich Einfluß auf das Magnetfeld der Erde zu nehmen, d.h. in ihrem Bereich zu verdichten. Die bekannten Suchgeräte sprechen auf derartige Veränderungen des Magnetfeldes an, jedoch nur, wenn sich das Markierungsrohr aus ferromagnetischem Werkstoff nicht allzuweit unterhalb der Erdoberfläche befindet In der Praxis ergeben sich vor allem dadurch erhebliche Schwierigkeiten, daß sich außer dem Markierungsrohr im Erdboden meist zahlreiche andere Gegenstände aus ferromagnetischem Werkstoff befinden, wie zum Beispiel Schrauben, Nägel und sonstige Eisenteile. Dies gilt nicht nur für den Bauschutt in Baubereichen. Auch in der unberührt erscheinenden Natur können sich metallische Abfälle, Stücke von

- 3 -

abgebrochenen metallischen Zaunpfählen, Drähten, Werkzeugen und dergleichen im Boden befinden.

Der Erfindung liegt demgemäß die Aufgabe zugrunde, eine Vorrichtung zum Markieren eines vermessenen Geländepunktes im Erdreich zu schaffen, welche auch bei größeren Tiefen ein sicheres Auffinden mittels Suchgeräten gestattet.

Die Aufgabe wird erfindungsgemäß gelöst durch einen in das Erdreich versenkbaren Körper, welcher in Abhängigkeit von der Tiefe der Versenkung und/oder der Wichtigkeit des Geländepunktes mit einem oder mehreren Dauermagneten versehen ist. Auf diese Weise wird erreicht, daß man mit dem Suchgerät deutlich unterscheiden kann zwischen der gesuchten Markierung und anderen im Erdboden befindlichen nicht interessierenden Metallgegenständen. Da den Dauermagneten ein außerordentlich starkes eigenes Magnetfeld innewohnt, kann man sie auch noch bei großen Tiefen in ihrer genauen Lage ausfindig machen.

Vorteilhafte Ausgestaltungen der Erfindung ergeben sich aus den Unteransprüchen.

Im folgenden wird die Erfindung an Hand von lediglich Ausführungswege darstellenden Zeichnungen näher erläutert. Es zeigt

Figur 1 eine Seitenansicht einer erfindungsgemäßen Vorrichtung,

Figur 2 eine Draufsicht gemäß Pfeil II in Figur 1 nach Abnahme der Dauermagneten,

- 4 -

Figur 3 einen Horizontalschnitt gemäß Schnittlinie III - III in Figur 1 und

Figur 4 eine Seitenansicht entsprechend Figur 1,
jedoch in einer anderen Ausführung.

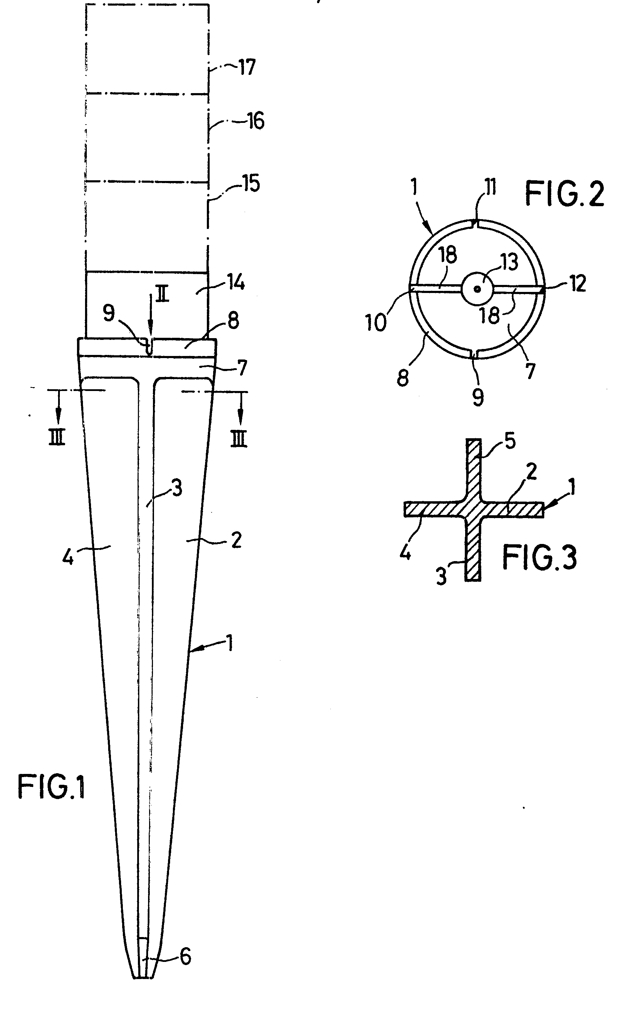

Die Figuren 1 bis 3 veranschaulichen ein Ausführungsbeispiel des Erfindungsgegenstandes.
In diesem Ausführungsbeispiel ist der in das
Erdreich versenkbare Körper 1 als Kunststoffstab
aus einem unverrottbaren zähharten Kunststoff ausgebildet, welcher in der in Figur 1 dargestellten
vertikalen Stellung versenkbar ist. Am oberen
Ende dieses Kunststoffstabes ist ein Dauermagnet 14 befestigt. Je nach den Umständen,
d.h. in Abhängigkeit von der gewählten Tiefe
der Versenkung im Erdreich und/oder der Wichtigkeit des Geländepunktes, an dem die Markierungsvorrichtung angebracht ist, ist der Körper
mit einem oder mehreren Dauermagneten versehen.
Man kann also auf den einen Dauermagneten 14
einen zweiten Magneten 15 und hierauf gegebenenfalls weitere Dauermagneten 16 und 17 aufsetzen.
Es empfiehlt sich, den Dauermagneten 14 so auszubilden und aufzusetzen, daß der magnetische
Nordpol und demgemäß der magnetische Südpol
nach unten weist. Die Anordnung der darüber
liegenden Dauermagneten erfolgt entsprechend.

Für die Konstruktion und die praktische Handhabung ergibt sich eine einfache Ausgestaltung
dadurch, daß nur der untere Dauermagnet an dem
Körper befestigt ist, während die weiteren
Dauermagnete 15, 16, 17 lose aufgesetzt sind,

- 5 -

so daß diese sich durch die Magnetkraft selbst halten.

Wenn der Körper 1 als Kunststoffstab ausgebildet ist, weist dieser zweckmäßigerweise am oberen Ende einen Kragen 8 auf, in den der Dauermagnet 14 durch Einklemmen befestigt ist. Dabei kann der Kragen 8 vorteilhafterweise im wesentlichen hohlzylindrisch ausgebildet und mit einem oder mehreren Schlitzen 9, 10, 11 und 12 versehen sein, so daß die dadurch voneinander getrennten Kragen, teile in radialer Richtung federnd elastisch sind und den Dauermagneten 14 mindestens teilweise auf dem Umfang und/oder in seiner Höhe umgreifen.

Die Dauermagnete sind vorteilhafterweise zylindrisch ausgebildet und mit vertikaler Zylinderachse an dem Körper 1 angeordnet. Der Dauermagnet kann auf diese Weise eine erhebliche Magnetkraft erhalten, und zwar bei kompakter Ausführung mit geringer Oberfläche. Dauermagnete dieser Art verlieren über die Betriebsdauer von etwa 100 Jahren Lagerzeit im Erdreich nur etwa 2 bis 3 % der Magnetkraft. Um die Dauermagnete vor äußeren Einflüssen noch besser zu schützen, ist es vorteilhaft, daß die Dauermagnete 14 bis 17 von einer Korrosionsschutzschicht, vorzugs- weise einer Kunststoffschicht, allseitig um- geben sind. Es versteht sich, daß man einen solchen Kunststoff auswählt, der seinerseits über entsprechende Zeiträume widerstandsfähig gegen in der Praxis auftretende mechanische oder chemische Einflüsse ist.

Eine für die Praxis vorteilhafte und einfache Konstruktion erhält man dadurch, daß der Kunststoffstab am oberen Ende einen zylindrischen Kopf 7 aufweist, an dessen Rand der besagte Kragen 8 angebracht, vorzugsweise einstückig mit dem Kopf und dem Kunststoffstab angeformt ist. Zum erleichterten Einbringen des Kunststoffstabes in das Erdreich ist dieser vom Kopf 7 ausgehend nach dem unteren Ende 6 hin konisch verjüngt.

Einen festeren Sitz und einen sicheren Halt kann der Kunststoffstab dadurch erhalten, daß mehrere, vorzugsweise vier, radial nach außen weisende nach unten hin in einer Spitze 6 auslaufende verjüngte Rippen 2 bis 5 aufweist.

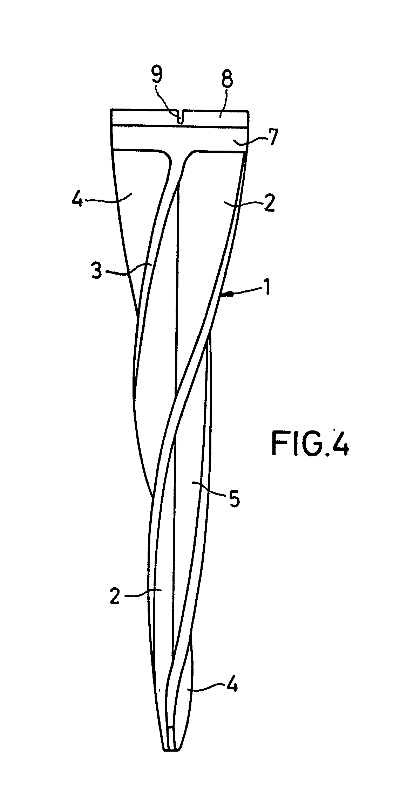

Wie Figur 4 verdeutlicht, können diese Rippen 2 bis 5 statt geradlinig auch schraubenförmig gewunden sein. Dabei empfiehlt sich, daß jede Rippe 2 bis 5 über ihre Länge um einen Winkel von etwa 180° um die Längsachse gewunden ist.

Zum Versenken des Anmeldungsgegenstandes in den Erdboden zur Markierung von vermessenen Geländepunkten geht man zweckmäßigerweise so vor, daß man eine vertikale Bohrung in das Erdreich eintreibt und sodann den vorteilhaft als Kunststoffstab ausgebildeten Körper 1 mit aufgesetztem Dauermagneten in diese Bohrung mit einem Stab einschiebt. Die Bohrung kann dann entweder mit Erdreich gefüllt werden oder,da sie nur einen kleinen Durchmesser hat, sich selbst überlassen bleiben, denn es wird schon nach

- 7 -

kurzer Zeit Erdreich von allen Seiten in die
Bohrung eindringen und diese ausfüllen. Dies
gilt vor allem auch für die Zwischenräume
zwischen den radial verlaufenden oben erläuterten Rippen, so daß sich auch hier eine gute
Verankerung im Boden ergibt.

Eine weitere vorteilhafte Ausbildung wird dadurch
erreicht, daß der Körper 1 an seinem oberen Ende
eine Richtungskennzeichnung, vorzugsweise in
Form von radial verlaufenden Kerben oder Rippen
18 gemäß Figur 4 aufweist. Die Markierungen
werden dann zweckmäßigerweise so in den Erdboden eingesetzt, daß die Richtungskennzeichnung
18 mit der betreffenden Grenze übereinstimmt
bzw. in Richtung auf die benachbarten Markierungspunkte hinweist. Des weiteren kann in der
Oberseite des Kopfes 7 eine zentrale Vertiefung
13, zweckmäßigerweise eine kegelförmige Vertiefung z.B. für das Einsetzen einer Spitze eines
Vermessungsstabes, vorgesehen werden. Außerdem
kann man auf dieser Oberseite weitere Markierungen oder Angaben, wie beispielsweise "Verm.-
Punkt" aufbringen. Diese letzteren Ausgestaltungen
sind besonders vorteilhaft für Markierungsvorrichtungen, die für weniger große Tiefen im Erdreich vorgesehen sind. Bei diesen Ausgestaltungen sollte der Dauermagnet 14, wie oben erläutert, durch einfaches Klemmen gehalten sein, so
daß man den Dauermagnet leicht abnehmen und die
darunter befindlichen Kennzeichnungen erkennen
kann.

- 8 -

Für Markierungsvorrichtungen, die für eine lange
Verweilzeit im Erdreich vorgesehen sind und
besonders auch für größere Tiefen ist es zweckmäßig, daß der Dauermagnet 14 mittels eines
Klebers mit dem Körper unlösbar verbunden ist.

Die oben erläuterten Zeichnungen stellen vorteilhafte Ausgestaltungen der erfindungsgemäßen
Markierungsvorrichtung dar. Je nach Anwendungsfall können aber sowohl für den Körper 1 als
auch für den oder die Dauermagneten und für die
Verbindungsteile zwischen diese andere Formen
gewählt werden. -

Die Anwendung der erfindungsgemäßen Markierungsvorrichtung ist nicht nur auf dem Gebiete der
Vermarkungs- bzw. Vermessungstechnik von Vorteil, sondern auch in vielen anderen Fällen,
so z.B. zum Markieren besonders wichtiger Punkte
von im Erdreich verlegten Anlagen, insbesondere
Erdöl-, Erdgas- oder Fernwärmeleitungen, wobei
man z.B. diejenigen Stellen markieren kann, an
welchen die Rohrabschnitte durch Flansche miteinander verbunden sind, wo die größte Gefahr
für das Entstehen von Undichtigkeiten gegeben
ist.

- 1 -

Patentansprüche

1. Vorrichtung zum Markieren eines vermessenen Geländepunktes im Erdreich, gekennzeichnet durch einen in das Erdreich versenkbaren Körper (1), welcher in Abhängigkeit von der Tiefe der Versenkung und/oder der Wichtigkeit des Geländepunktes mit einem oder mehreren Dauermagneten (14 bis 17) versehen ist.

2. Vorrichtung nach Anspruch 1, dadurch gekennzeichnet, daß der Körper (1) als Kunststoffstab ausgebildet ist, welcher in vertikaler Stellung versenkbar ist, und daß an dem oberen Ende (7,8) mindestens ein Dauermagnet (14 bis 17) befestigt ist.

3. Vorrichtung nach Anspruch 2, dadurch gekennzeichnet, daß der Kunststoffstab am oberen Ende einen Kragen (8) aufweist, in dem der Dauermagnet durch Einklemmen befestigt ist.

4. Vorrichtung nach Anspruch 3, dadurch gekennzeichnet, daß der Kragen (8) im wesentlichen hohlzylindrisch ausgebildet und mit einem oder mehreren vertikalen Schlitzen (9 bis 12) versehen ist, so daß die Kragenteile federnd elastisch sind und den Dauermagneten (14) mindestens teilweise umgreifen.

5. Vorrichtung nach einem der vorhergehenden Ansprüche, dadurch gekennzeichnet, daß die Dauermagnete (14 bis 17) zylindrisch ausgebildet und mit vertikaler Zylinderachse

- 2 -

angeordnet sind.

6. Vorrichtung nach einem der vorhergehenden Ansprüche, dadurch gekennzeichnet, daß nur der untere Dauermagnet (14) an dem Körper (1) befestigt ist und die weiteren Dauermagnete (15, 16, 17) lose aufgesetzt sind, so daß sie sich durch die Magnetkraft halten.

7. Vorrichtung nach einem der vorhergehenden Ansprüche, dadurch gekennzeichnet, daß die Dauermagnete (14 bis 17) von einer Korrosionsschutzschicht, vorzugsweise einer Kunststoffschicht, allseitig umgeben sind.

8. Vorrichtung nach einem der Ansprüche 3 bis 7, dadurch gekennzeichnet, daß der Kunststoffstab am oberen Ende einen zylindrischen Kopf (7) aufweist, an dessen Rand der Kragen (8) angebracht, vorzugsweise einstückig angeformt ist, und daß der Kunststoffstab vom Kopf (7) ausgehend nach dem unteren Ende (6) hin konisch verjüngt ist.

9. Vorrichtung nach Anspruch 8, dadurch gekennzeichnet, daß der Kunststoffstab mehrere, vorzugsweise vier, radial nach außen weisende nach unten hin in einer Spitze (6) auslaufende verjüngte Rippen (2 bis 5) aufweist.

10. Vorrichtung nach Anspruch 9, dadurch gekennzeichnet, daß die Rippen (2 bis 5) schraubenförmig gewunden sind.

- 3 -

11. Vorrichtung nach Anspruch 10. dadurch gekennzeichnet, daß jede Rippe (2 bis 5) über ihre
Länge um einen Winkel von etwa 180° gewunden
ist.

12. Vorrichtung nach einem der vorhergehenden
Ansprüche, dadurch gekennzeichnet, daß der
Körper (1) an seinem oberen Ende eine Richtungskennzeichnung (18), vorzugsweise in Form
vom radial verlaufenden Kerben oder Rippen,
aufweist.

13. Vorrichtung nach Anspruch 6, dadurch gekennzeichnet, daß der Dauermagnet (14) mittels
eines Klebers mit dem Körper (1) unlösbar verbunden ist.

0101757

-1/2-

17

16

15

14

II

9   8

7

II

III

III

3

4   2

1

FIG.1

FIG.2

1   11

18   13

10   12

8   18

8   9   7

5

2

1

4

3   FIG.3

6

FIG.4

| | | 0101757 |
|---|---|---|
| Europäisches Patentamt | **EUROPÄISCHER RECHERCHENBERICHT** | Nummer der Anmeldung<br>EP 82 10 8017 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 916 821 (PIES)<br>* Spalte 1, Zeile 52 - Spalte 2, Zeile 41 ; Figuren 1-6 * | 1-5 | G 01 C 15/04<br>E 01 F 9/02 |
| X,A | DE-U-7 431 704 (J. ELSEN)<br><br>* Seite 2, 3. Absatz von unten ; Figuren 1-4 * | 1,2,5, 13 | |
| X | DE-A-2 307 170 (J. LEPTIEN)<br>* Ganzes Dokument * | 1,12 | |
| X | DE-U-1 873 783 (E. PFANSTIEL)<br>* Ganzes Dokument * | 1,2,7 | |
| A | US-A-4 185 424 (STREIT)<br>* Figuren 1, 2 * | 8,9 | RECHERCHIERTE SACHGEBIETE (Int. Cl. ³) |
| A | FR-A-2 274 025 (MISSON)<br>* Ansprüche 1-3 ; Figur 1 * | 9,10 | E 01 F 9/00<br>G 01 C 15/00 |
| A | US-A-2 527 681 (F.B. LEWIS et al.)<br>* Spalte 4, Zeilen 34-44 ; Figuren 1-5 * | 1,2,5 | |
| A | DE-U-6 939 739 (STANJEK)<br><br>--- -/- | | |

Der vorliegende Recherchenbericht wurde für alle Patentansprüche erstellt.

| Recherchenort | Abschlußdatum der Recherche | Prüfer |
|---|---|---|
| BERLIN | 16-03-1983 | PAETZEL H-J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 902 185   (WOLFCARIUS) | | |

-----

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| BERLIN | 16-03-1983 | PAETZEL H-J |